# EUROPÄISCHE PATENTSCHRIFT

(11) **EP 1 351 787 B1**
(45) Veröffentlichungstag und Bekanntmachung des Hinweises auf die Patenterteilung: **09.03.2005**
(21) Anmeldenummer: 01273077.6
(22) Anmeldetag: 12.12.2001
(51) Int. Cl.: B22D 19/14, C22C 1/10, B22D 21/00

(54) **VERSTÄRKTES STRUKTURELEMENT UND VERFAHREN ZU DESSEN HERSTELLUNG**
REINFORCED STRUCTURAL ELEMENT AND METHOD FOR ITS PRODUCTION
ELEMENT DE STRUCTURE RENFORCE ET PROCEDE POUR SA FABRICATION

(30) Priorität: 16.01.2001 DE 10101650
(43) Veröffentlichungstag der Anmeldung: 15.10.2003
(73) Patentinhaber: DaimlerChrysler AG, 70567 Stuttgart (DE)
(72) Erfinder: BRINKSCHRÖDER, Harald, 71034 Böblingen (DE); FUSSNEGGER, Wolfgang, 72074 Tübingen (DE); FÜLLER, Karl-Heinz, 89231 Neu-Ulm (DE); HAUG, Tilman, 89264 Wei enhorn (DE); SCHEYDECKER, Michael, 89278 Nersingen (DE); TSCHIRGE, Tanja, 73072 Donzdorf (DE); WEISSKOPF, Karl-Ludwig, 73635 Rudersberg (DE)
(86) Internationale Anmeldenummer: PCT/EP2001/014621
(87) Internationale Veröffentlichungsnummer: WO 2002/055236

(56) Entgegenhaltungen:
- US-A- 4 266 596
- PATENT ABSTRACTS OF JAPAN vol. 014, no. 250 (C-0723), 29. Mai 1990 (1990-05-29) & JP 02 070030 A (HONSHU PAPER CO LTD;OTHERS: 01), 8. März 1990 (1990-03-08)
- DATABASE WPI Section Ch, Week 198634 Derwent Publications Ltd., London, GB; Class M22, AN 1986-222241 XP002195724 & JP 61 153245 A (TOKAI CARBON KK), 11. Juli 1986 (1986-07-11)
- DATABASE WPI Section Ch, Week 199116 Derwent Publications Ltd., London, GB; Class A32, AN 1991-112586 XP002195720 & JP 03 052754 A (KOBE STEEL LTD), 6. März 1991 (1991-03-06)

## Beschreibung

Die Erfindung betrifft ein verstärktes Strukturelement nach Patentanspruch 1 und ein Verfahren zur Herstellung eines derartigen Strukturelementes nach Patentanspruch 7

Verstärkungen von Kunststoffen durch Gewebe oder Fasern sind gemeinhin bekannt. Das Spektrum reicht hierbei von armierten Folien, mit einer Armierung aus 2-dimensionalen Gewebe bis hin zu laminierten Kunststoff-Karosserieteilen, die bevorzugt im Rennsport oder in der Luftfahrt eingesetzt werden. Hierbei werden mehrere Lagen von Geweben, die zumeist aus organischen Fasern bestehen, übereinandergelegt und mit einem Kunstharz getränkt. Derartige Verfahren liefern zwar leichte Strukturbauteile, sind jedoch in der automobilen Serienfertigung aus Kostengründen nicht wirtschaftlich einzusetzen.

Weitere Arten von Verstärkungen werden im Bereich von Verbrennungskraftmaschinen z. B. bei Pleuel, Kolben oder Zylinderlaufbuchsen angewendet. Als Beispiel sei hier die US 4,266,596 genannt. Diese Schrift beschreibt die Herstellung eines Composite-Werkstoffes durch die unidirektionale Bündelung von Fasern. Hierdurch wird eine Steigerung der Festigkeit, insbesondere von hochbelasteten Motorbauteilen erzielt, für großflächige Dünnwandige Bauteile z. B. im Karosseriebau sind diese Faserverstärkungen ungeeignet, da mit der höheren Festigkeit eine deutliche Versprödung des Werkstoffes einhergeht.

Die Aufgabe besteht deshalb darin, ein Strukturelement darzustellen, das gegenüber dem Stand der Technik kostengünstiger herzustellen ist und eine höhere Bruchdehnung aufweist.

Die Lösung der Aufgabe erfolgt durch ein Strukturelement nach Patentanspruch 1 und durch ein Verfahren nach Patentanspruch 7.

Das erfindungsgemäße Strukturelement ist im Allgemeinen als ein dünnwandiges Blech oder Halbzeug ausgebildet und ist durch ein Gewebe verstärkt. Das Gewebe durchdringt das Strukturelement zumindest teilweise und ist dabei zweidimensional oder dreidimensional angeordnet. Das Gewebe besteht aus anorganischen Fasern oder Drähten, die sich gut in eine metallische Matrix insbesondere durch Gießen des Metalles integrieren lassen.

Unter dem Begriff Gewebe werden im Folgenden alle Strukturen verstanden, bei denen Fasern (Kurzfaser oder Endlosfasern) und/oder Drähte (= metallische Fasern) miteinander verknüpft sind. Hierzu gehören insbesondere gewebte, gewirkte, gestickte oder geflochtene Strukturen sowie Vliese, Filze oder andere ungeordnete Strukturen. Unter einer zweidimensionalen Struktur wird hierbei z. B. eine Webstruktur verstanden, bei der sich die Fasern im Wesentlichen in zwei Raumrichtungen (x- und y-Richtung) erstrecken. Dies gilt auch für Webstrukturen, die in mehreren Lagen übereinander geschichtet sind. Eine dreidimensionale Struktur hingegen ist z. B. eine Strickstruktur oder ein Nadelvlies, bei denen die Fasern sowohl in x- und y-Richtung als auch in z-Richtung verlaufen.

Grundsätzlich kommen für die Fasern oder Drähte alle anorganischen Materialien in Frage. Besonders geeignet sind jedoch metallische Drähte (insbesondere auf Eisenbasis), oder keramische Fasern (auch Kohlenstofffasern), die eine ausreichende Oxidationsbeständigkeit gegenüber einem flüssigen Metall aufweisen. Gewebe können auch aus verschiedenartigen Fasern und/oder Drähten bestehen. Fasern und Drähte werden im Folgenden vereinfachend Fasern genannt.

Bleche, die eine erfindungsgemäße Verstärkung aufweisen, haben gegenüber herkömmlichen Bleche deutlich höhere Bruchdehnungen. Das verstärkende Gewebe verformt sich elastisch und verhindert das Ausbreiten von Rissen in der metallischen Matrix. Somit kann ein höheres Maß an Stoßenergie vom Strukturelement aufgenommen werden, als dies bei herkömmlichen Strukturelementen der Fall ist.

Die Energieabsorption des verstärkten Strukturelementes wird noch optimiert, wenn die Verstärkung makroskopisch ausgestaltet ist. Makroskopisch bedeutet hierbei, dass die Faserstärke sowie die Maschenweite des Gewebes annähernd in der selben Größenordnung wie die Wandstärke des Strukturelementes liegt, wobei das Gewebe unterschiedliche Faserstärken enthalten kann. Bei üblichen Bauteilen bedeutet dies, dass die Faserstärke zwischen 1 µm und 10 mm liegt, in der Praxis werden 0,2 mm bis 1 mm bevorzugt. Dies gilt ebenso für die Maschenweite des Gewebes, diese liegen zwischen 2 µm und 20 mm, in der Praxis zwischen 0,4 mm und 2 mm.

Die Matrix und das Gewebe gehen in vorteilhafter Weise nicht monolithisch ineinander über, sondern weisen entweder eine Zwischenschicht oder eine mikroskopisch unterbrochene Anbindung auf. Dies führt zu einem sogenannten Pull-Out-Effekt. Dieser bewirkt eine Energieabsorption durch eine mikroskopische Bewegung der Fasern in der Matrix. Erzielt wird dieser Effekt, indem entweder die Fasern beschichtet oder aufgerauht werden. In diesem Zusammenhang ist es vorteilhaft, wenn der Elastizitäts-Nodul (E-Modul) der Faser größer ist als der E-Modul der Matrix.

Metallische Fasern weisen neben der bereits erwähnten guten chemischen Verträglichkeit gegenüber der metallischen Matrix und der hohen Bruchdehnung auch eine gute mechanische Formbarkeit auf, so dass das Gewebe bereits nahezu in der Form des Strukturelementes darstellbar ist.

Bevorzugt besteht die Matrix aus den Leichtmetallen Aluminium oder Magnesium, andererseits kann auch Stahl zum Einsatz kommen. Diese Metalle, insbesondere ihre Legierungen sind übliche Konstruktionsmetalle und lassen sich gut gießen. Zudem sind die genannten Werkstoffe kostengünstig verfügbar und sind in größeren Mengen wirtschaftlich anwendbar.

Das erfindungsgemäße Strukturelement findet bevorzugt Anwendung in Fahrzeugkarosserien. Als geeignete Bauteile seien hierbei Integralträger, Längsträger Innenteile von Türen oder Säulen genannt. Diese Bauteile sind insbesondere in Crashsituationen für die Absorption der Crashenergie verantwortlich. Die erfindungsgemäße Verstärkung dieser Strukturelemente kann herkömmliche Crashstrukturen noch verbessern oder teurere Konstruktionen ersetzen.

Eine weitere Ausgestaltung der Erfindung ist ein Verfahren zur Herstellung eines Strukturbauteils nach Patentanspruch 7.

Das Verfahren zeichnet sich dadurch aus, dass ein Gewebe, insbesondere ein Gewebe durch einen Formungsprozeß, z. B. durch Pressen oder Biegen in die Form des darzustellenden Strukturelementes gebracht wird. Durch bestimmte Strick- oder Wirkverfahren ist es auch möglich, direkt komplexe Formen abzubilden und dabei auf ein mechanisches Formgebungsverfahren weitgehend zu verzichten.

Im Anschluß an die Formgebung des Gewebes wird dieses in eine Gießform eingelegt und arretiert. Dies kann z. B. magnetisch oder durch Formschluß erfolgen. Im weiteren Verlauf des Verfahrens wird die Gießform mit flüssigem Metall gefüllt, wodurch das Strukturelement ausgebildet wird. Nach dem Erstarren des Metalls wird das Strukturelement aus der Gießform entformt. Das Gewebe wird somit vollständig von dem Matrixmetall umschlossen. Das erfindungsgemäße Verfahren stellt somit eine sehr kostengünstige Methode dar, komplexe Strukturelemente mit der erfindungsgemäßen Verstärkung herzustellen.

Zur Erzielung des genannten Pull-Out-Effektes ist es zweckmäßig, die Fasern des Gewebes vor der Herstellung des Gewebes oder vor dem Formprozeß oder vor dem Einlegen des Gewebes in die Gießform zu beschichten oder aufzurauhen. Als Verfahren zur Beschichtung bieten sich Tauchbeschichtung, physikalische oder chemische Abscheidungsverfahren wie z. B. Phosphatieren an. Als aufrauhende Oberflächenbehandlungen eignen sich u. a. tribochemische Behandlungen, Behandlungen mit Säure oder Lauge, Sandstrahlen oder Behandlung durch elektrochemische Reaktionen.

Besonders geeignete Gießverfahren zur Herstellung des erfindungsgemäßen Strukturelements sind Druckgießverfahren. Hierzu zählen sowohl das herkömmliche Druckgießen, das Squeeze-Casting oder Niederdruckgießverfahren. Die Druckbeaufschlagung des Gießmetalls führt zu einer homogeneren Verteilung des Matrixmetalls um das verstärkende Gewebe herum. Lunker und Blasen können bei einer optimierten Anbindung zwischen Gewebe und Matrix minimiert werden. Üblicherweise wird bei den genannten Verfahren ein Druck zwischen 10 bar (Niederdruckguß) und 1000 bar (Druckguß) angewendet. Neben den Druckgießverfahren ist insbesondere beim Stahlguß ein Schwerkraftguß zur Herstellung des erfindungsgemäßen Strukturelements geeignet.

Im Folgenden wird die Erfindung an einem Ausführungsbeispiel näher erläutert.

Die einzige Figur zeigt schematisch das Verfahren zur Herstellung des erfindungsgemäßen Strukturelementes.

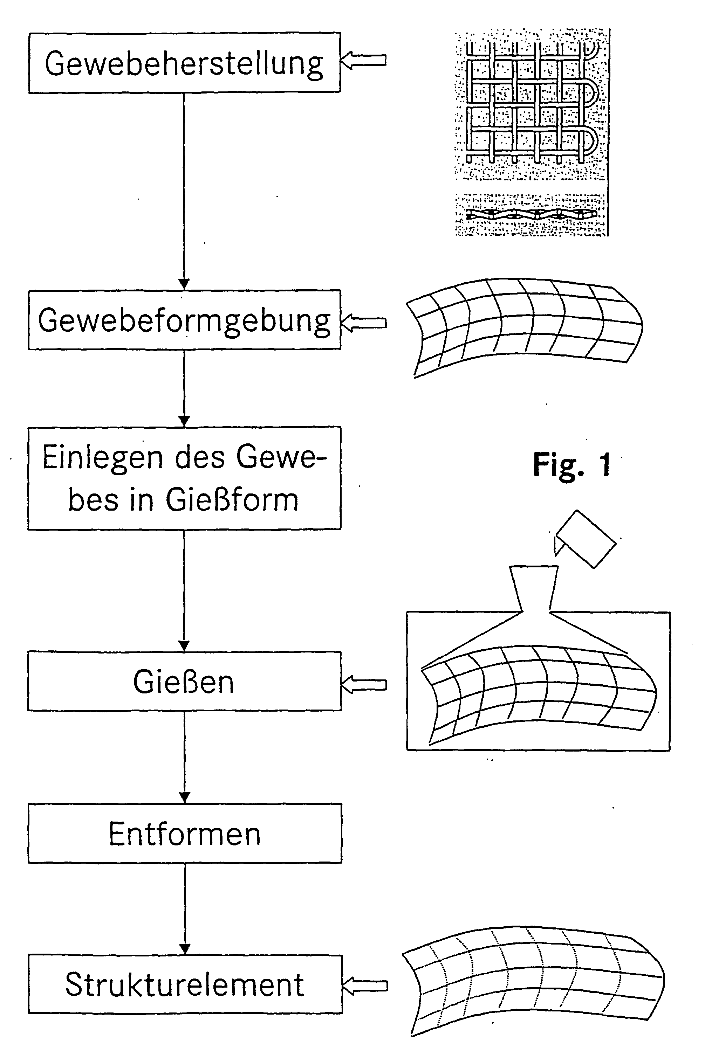

**Fig. 1** zeigt in der linken Hälfte die einzelnen, aufeinanderfolgenden Verfahrensschritte, wobei ein Beschichten, bzw. Aufrauhen der Fasern, das üblicherweise vor der Gewebeherstellung erfolgt, nicht dargestellt ist. In der rechten Hälfte ist schematisch der Zustand eines Strukturelementes in den einzelnen Verfahrensschritten dargestellt.

Das dargestellte Gewebe ist hier in einer einfachen Webform zweidimensional ausgestaltet. Prinzipiell sind alle maschinell herstellbaren Verbindungen von Fasern denkbar. Im zweiten Verfahrensschritt wird das Gewebe so umgeformt, dass es annähernd der Form des Strukturelementes entspricht (Gewebeformgebung). Hierzu wird das Gewebe in ein Preßwerkzeug gelegt, das die gewünschten Außenkonturen abbildet. Prinzipiell ist es möglich, diesen Verfahrensschritt direkt in der Gießform vorzunehmen, indem man das ungeformte Gewebe in die Gießform einlegt und diese schließt.

Im nächsten Verfahrensschritt wird das geformte Gewebe in die Gießform gelegt, dort arretiert (Einlegen des Gewebes in Gießform) und die Gießform mit flüssigem Metall befüllt (Gießen). Schematisch ist in **Fig. 1** das Gießen im Schwerkraftguß dargestellt, was insbesondere beim Stahlguß zweckmäßig ist. Leichtmetalle wie Aluminium und Magnesium werden bevorzugt unter Druck vergossen. Hierzu kommt üblicherweise eine Druckgußmaschine oder eine Squeeze-Casting-Maschine zum Einsatz.

Anschließend erfolgt das Entformen und des fertigen Strukturelements, das gegebenenfalls leicht nachbearbeitet wird (z. B. Entgraten).

## Patentansprüche

1. Verstärktes Strukturelement aus einer metallischen Matrix und einer Verstärkung aus anorganischen Fasern, wobei die Verstärkung das Strukturelement zumindest teilweise durchdringt, wobei die Verstärkung in Form eines Gewebes mindestens zweidimensional ausgestaltet ist,
**dadurch gekennzeichnet, dass**
• das Strukturelement in Form eines Bleches oder Halbzeuges ausgebildet ist, dessen Wandstärke zwischen 0,2 mm und 5 mm beträgt und
• eine Maschenweite des Gewebes zwischen 0,25 µm und 25 mm liegt.

2. Verstärktes Strukturelement nach Anspruch 1,
**dadurch gekennzeichnet, dass**
der Durchmesser der Fasern zwischen 0,1 µm und 10 mm liegt.

3. Verstärktes Strukturelement nach einem der vorhergehenden Ansprüche,
**dadurch gekennzeichnet, dass**
die Anbindung zwischen Fasern und Matrix mikroskopisch unterbrochen ist oder dass Fasern und Matrix durch eine Zwischenschicht getrennt sind.

4. Verstärktes Strukturelement nach einem der vorhergehenden Ansprüche,
**dadurch gekennzeichnet, dass**
die Fasern des Gewebes aus metallischen Drähten bestehen.

5. Verstärktes Strukturelement nach einem der vorhergehenden Ansprüche,
**dadurch gekennzeichnet, dass**
die Matrix aus Aluminium, Magnesium, Eisen oder einer Legierung dieser Elemente besteht.

6. Verstärktes Strukturelement nach einem der vorhergehenden Ansprüche,
**dadurch gekennzeichnet, dass**
das Strukturelement als Teil einer Karosserie eines Fahrzeuges ausgebildet ist.

7. Verfahren zur Herstellung eines verstärkten Strukturelementes nach einem der Ansprüche 1 bis 6, wobei
• Fasern vor einer Gewebeherstellung beschichtet oder aufgeraut werden,
• ein Gewebe aus diesen Fasern in die Form des Strukturelementes gebracht wird,
• das geformte Gewebe in eine Gießform eingelegt wird,
• die Gießform mit flüssigen Metall unter Druck gefüllt wird und
• nach dem Erstarren des Metalls das Strukturelement aus der Gießform entformt wird.

## Claims

1. Reinforced structural element comprising a metallic matrix and a reinforcement comprising inorganic fibres, the reinforcement at least partially penetrating through the structural element, the reinforcement being configured in the form of a fabric in at least two dimensions, **characterized in that**
• the structural element is designed in the form of a metal sheet or semifinished product, the wall thickness of which is between 0.2 mm and 5 mm and
• a mesh width of the fabric is between 0.25 µm and 25 mm.

2. Reinforced structural element according to Claim 1, **characterized in that** the diameter of the fibres is between 0.1 µm and 10 mm.

3. Reinforced structural element according to one of the preceding claims, **characterized in that** the bonding between fibres and matrix is microscopically interrupted, or **in that** fibres and matrix are separated by an intermediate layer.

4. Reinforced structural element according to one of the preceding claims, **characterized in that** the fibres of the fabric comprise metallic wires.

5. Reinforced structural element according to one of the preceding claims, **characterized in that** the matrix consists of aluminium, magnesium, iron or an alloy of these elements.

6. Reinforced structural element according to one of the preceding claims, **characterized in that** the structural element is designed as part of a body of a vehicle.

7. Process for producing the reinforced structural element according to one of Claims 1 to 6,
• fibres are coated or roughened before a fabric is produced,
• a fabric of these fibres is brought into the shape of the structural element,
• the shaped fabric is placed into a casting mould,
• the casting mould is filled with liquid metal under pressure, and
• after the metal has solidified, the structural element is demoulded from the casting mould.

## Revendications

1. Elément de structure renforcé constitué d'une matrice métallique et d'un renforcement en fibres anorganiques, dans lequel le renforcement pénètre au moins partiellement l'élément de structure, dans lequel le renforcement est configuré sous la forme d'un tissu en au moins deux dimensions,
**caractérisé en ce que**
• l'élément de structure est configuré sous la forme d'un feuillard ou d'une plaque d'acier, dont l'épaisseur de paroi est comprise entre 0,2 mm et 5 mm et
• une largeur de maille du tissu est comprise entre 0,25 µm et 25 mm.

2. Elément de structure renforcé selon la revendication 1,
**caractérisé en ce que**
le diamètre des fibres est compris entre 0,1 µm et 10 mm.

3. Elément de structure renforcé selon une des revendications précédentes,
**caractérisé en ce que**
la liaison entre les fibres et la matrice présente des ruptures microscopiques et **en ce que** les fibres et la matrice sont séparées par une couche intermédiaire.

4. Elément de structure renforcé selon une des revendications précédentes,
**caractérisé en ce que**
les fibres du tissu sont constituées de fils métalliques.

5. Elément de structure renforcé selon une des revendications précédentes,
**caractérisé en ce que**
la matrice est constituée d'aluminium, de magnésium, de fer ou d'un alliage de ces éléments.

6. Elément de structure renforcé selon une des revendications précédentes,
**caractérisé en ce que**
l'élément de structure est configuré comme une partie d'une carrosserie d'un véhicule automobile.

7. Procédé pour produire un élément de structure renforcé selon une des revendications 1 à 6, dans lequel
■ les fibres sont enduit ou rendre rugueuses avant la fabrication de tissu;
■ un tissu de ces fibres est modèle à la forme d'élément de structure;
■ le tissu formé est inséré dans une moule à fondre;
■ la moule à fondre est rempli avec métal liquide sous pression; et
■ après la solidification du métal l'élément de structure est démoulé.
